# EUROPEAN PATENT APPLICATION

(11) **EP 2 782 338 A1**
(43) Date of publication of application: **24.09.2014**
(21) Application number: 13460017.0
(22) Date of filing: 22.03.2013
(51) Int. Cl.: H04N 7/18

(54) **System for video verification of events on the sports field**

(71) Applicant: 1.TDS Polska Sp. z o. o., 02-972 Warszawa (PL); Wichniewicz, Mariusz, 05-530 Góra Kalwaria (PL)
(72) Inventor: The designation of the inventor has not yet been filed
(74) Representative: Kaminski, Zbigniew

(57) **Abstract**

A system for video verification of events on the sports field with use of cameras tracking the movement of a ball, a device for recording the movement of the ball and enabling an on-demand playback, and a display for on-demand displaying a fragment or a whole event. The system is characterized in that it comprises at least one group of cameras observing the following event elements: a ball, players, lines or any combination of these elements, wherein the cameras (K1, K2, Kn) of the respective groups are possibly equipped with autonomous recorders, and are also connected to the central module (MC) equipped with at least a visualization device (VM) and a control device (CM). The central module (MC) allows access to event images for verification in less than 10 seconds.

## Description

The present invention relates to a system for video verification of events on the sports field. This system can be applied to different types of team games, especially to ball games.

European patent No. EP 1347807 B1 discloses a system for judging boundary lines on a tennis court in order to determine a landing spot of a ball in relation to a court line. The system describes a computer simulation of the ball that bounces inside or outside the court. This system is suitable for tennis only, while its main disadvantage is the tracking of ball movement only, but not movement of players.

U.S. Patent No. U.S. 6,394,897 describes a volleyball video game system, which tracks a ball position and uses cursors to determine a distance between the ball and a player to initiate an action by the player. The game system is simulated by a computer. In this video game system there is no possibility to playback events, as well as position control and movement of the players during the events in a real game.

In modern team game competitions the way of playing becomes more fast and dynamic. A ball after being hit by a player can reach speeds over 120 km/h. At such high speeds, the human eye is not able to accurately determine, for example, the location of a contact point between the ball and the sports field, hence there are more and more referee's mistakes that can often distort a result of a game.

The object of the present invention is to provide a system that enables accurate tracking of a ball and players, and registration of respective events, thereby eliminating the possibility of referee's mistakes and ensuring proper judgement of a game. This object has been achieved by the system for video verification of events on the sports field according to the invention, the essence of which is the use of an arrangement of synchronized cameras which register the whole sports field and sensitive locations, especially locations where it is possible to make a mistake in event judgement, wherein images from the cameras are archived, and in a very a short time, almost instantly, it is possible at any time to undo a recording so that to verify the event.

The object of the present invention is achieved by a system for video verification of events on the sports field, which is **characterized in that** it comprises at least one group of cameras observing the following event elements: a ball, players, lines or any combination of these elements, wherein the cameras of the respective groups are possibly equipped with autonomous recorders, and are also connected to a central module equipped with at least a visualization device and a control device, wherein the central module allows access to event images for verification in less than 10 seconds.

Preferably, the central module of the system comprises a recording device, a video signal distribution device and wireless network devices, as well as a marker for tagging successive events being recorded.

Advantageously, the system uses cameras with the operating speed of at least 100 frames per second, which transmit images in a low-loss image format.

In order to verify events on a volleyball court, the system is preferably equipped with 15 cameras, wherein on side lines there are four cameras recording the position and movement of the ball: on end lines - 2 cameras recording the position of the ball, a player and lines, on attack lines - 2 cameras recording the position of the player, on a line under a net - 1 camera observing the position of the ball and the player, on the net - 2 cameras observing the position of the ball, the player and the net, as well as two cameras observing net lines and antennas, the position of the player and the ball, one camera observing an overall view of the court and one camera observing a scoreboard, wherein all the cameras can be fixed.

The advantage of the system according to the invention is its ability to:
- detect organizational mistakes, such as improper arrangement of the players on a sports filed, mistakes in rotation of the players on the sports field, non-regulatory changes of the players and the number of players on the sports field, etc.
- detect mistakes of contacts with a ball, such as a double-hit mistake, a thrown ball mistake, prohibited touching the ball with hand, etc.
- detect contacts with prohibited elements of the sports field and space of an opponent, e.g. a contact with a net, playing in an opponent's area, a player's mistake in attack,
- detect a position of the ball in or out of the sports field,
- detect a moment of blocking the ball, "four-time hit" ball, and a location of the ball in the goal or outside it,
- detect unsportsmanlike conduct or a game delay.

The present invention is exemplary shown in the drawing, in which:
Figure 1 shows an example of an arrangement of cameras of a system on a volleyball court;
Figure 2 shows an example of an arrangement of cameras of the system on a football pitch; and
Figure 3 is a block diagram of the system showing a central module and its devices.

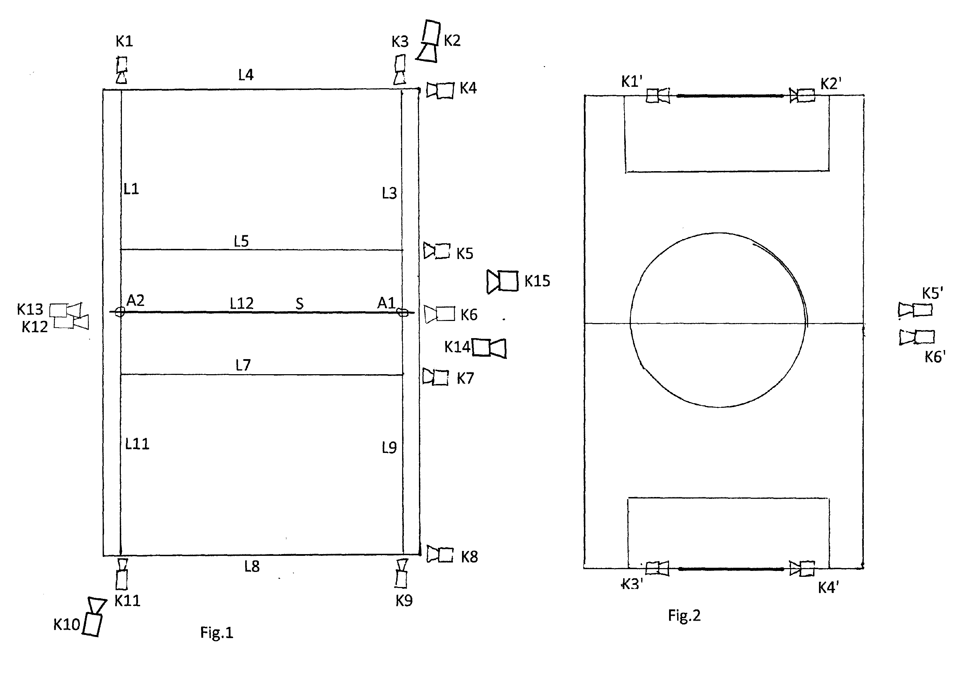

Fig. 1 shows a volleyball court with an arrangement of camera groups of a system, which are positioned on the court: cameras K4, K8 on end lines L4, L8, cameras K1, K3, K9, K11 on side lines L1, L3, L9 and L11 of the court, cameras K5, K7 on attack lines L5, L7, camera K12 under a net S on a line L12, cameras K13, K6 over the net S, camera K15 positioned outside the court and covering an overall view of the court, camera K14 positioned outside the court and covering a view of a scoreboard, and cameras K2, K10 observing antennas A1 and A2 at the net S.

Figure 2 shows a football pitch with an arrangement of camera groups of the system, which are positioned on the pitch: cameras K1 ', K2', K3 ', K4' installed at top corners of a goal and observing whether a ball goes beyond a goal line with its full circumference, and cameras K5' and K6' positioned outside the pitch and covering an overall view of the pitch.

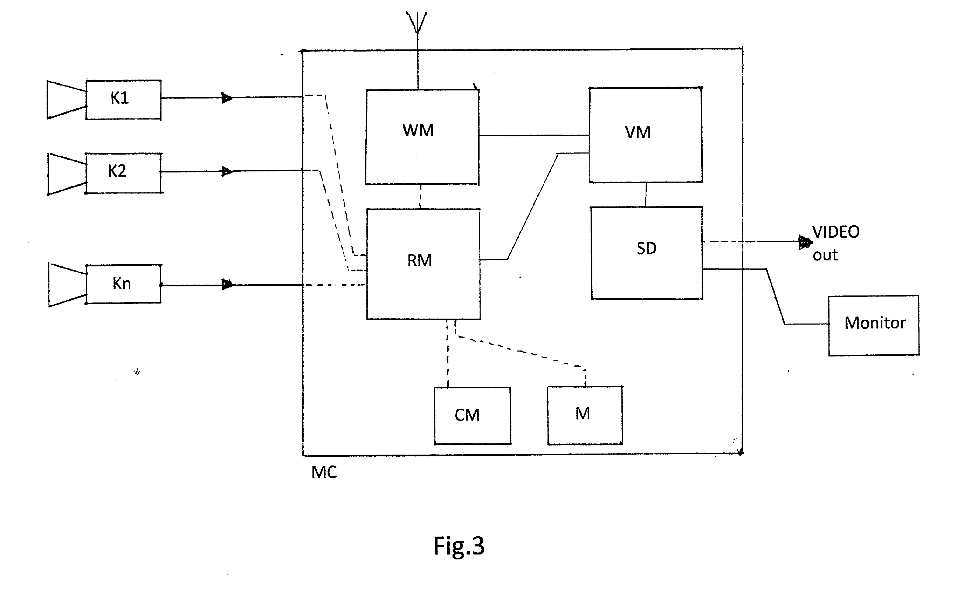

Fig. 3 shows a block diagram of modules and devices in the system, in which the cameras K1 .... Kn are connected to a central module MC by active elements of a network (wired or radio). The central module MC consists of the following devices: a recording device RM comprising e.g. a recorder with a hard disk, a video signal distribution device SD for connection with external monitors and video signals receivers, such as television broadcast vans, wireless network devices WM to distribute, in a wireless manner, information relating to verification of events within a sports field, e.g. to a tablet-type device, which is in the possession of a main referee. In addition, the central module MC also includes a visualization device VM and a system control device CM that allows direct operation of the system by an operator of the system.

The central module CM is equipped with a marker M which is used to mark relevant points on video material being currently recorded, which indicate in the recording the beginning or the end of a relevant event. Pressing the marker results in insertion of a tag at some point in the recording, such as at the start of ball serving.

In the case of a controversial situation on the sports field, e.g. if it is suspicious that a player crossed the end line L4 of the court during ball serving, players of the opposing team may request video verification and the main referee stops the game and allows for video verification. The second referee comes to a station with the central module MC and shows the operator of the system a court area to perform video verification. The operator selects by means of the control unit CM a fragment of the recording tagged with the marker and immediately makes it available to the referee. Dividing recordings into fragments with the marker, and the speed of the system operation allows instant access to recordings containing the necessary information in less than 10 seconds, significantly reducing durations of breaks in a game.

Thanks to a large number of high-speed cameras and properly constructed central module duration of breaks in the game can be significantly reduced, while mistakes which usually create a lot of very negative emotions and conflicts on the sports field can be eliminated.

One or more monitors can be connected to the central module MC.

When using the system e.g. in the game of football (Fig. 2), verification rules are similar.

The use of the system, in addition to the instant access to the necessary information in order to verify events, is also important to calm the atmosphere and improve safety during sporting events, by eliminating the human factor in the process of making important and binding decisions. The system is scalable and can be used successfully in a variety of sport disciplines.

## Claims

1. A system for video verification of events on the sports field with use of cameras tracking the movement of a ball, a device for recording the movement of the ball and enabling an on-demand playback, and a display for on-demand displaying a fragment or a whole event, **characterized in that** it comprises at least one group of cameras observing the following event elements: a ball, players, lines or any combination of these elements, wherein the cameras (K1, K2, Kn) of the respective groups are possibly equipped with autonomous recorders, and are also connected to the central module (MC) equipped with at least a visualization device (VM) and a control device (CM), wherein the central module (MC) allows access to event images for verification in less than 10 seconds.

2. The system according to claim 1, **characterized in that** the central module (MC) comprises a recording device (RM), a video signal distribution device (SD) and wireless network devices (WM).

3. The system according to claim 1, **characterized in that** the central module comprises a marker (M) for tagging successive events being recorded.

4. The system according to claim 1, **characterized in that** it uses the cameras (K1, K2, Kn) with the operating speed of at least 100 frames per second.

5. The system according to claim 1, **characterized in that** it uses the cameras (K1, K2, Kn) transmitting images in a low-loss image format.

6. The system according to claim 1, **characterized in that** in order to verify events on a volleyball court, it is equipped with 15 cameras (K1 to K15), wherein on side lines there are four cameras recording the position and movement of the ball, on end lines - 2 cameras recording the position of the ball, a player and lines, on attack lines - 2 cameras recording the position of the player, on a line under a net -1 camera observing the position of the ball and the player, on the net - 2 cameras observing the position of the ball, the player and the net, as well as two cameras observing net lines and antennas, the position of the player and the ball, one camera observing an overall view of the court and one camera observing a scoreboard, wherein all the cameras can be fixed.
